# FASCICULE DE BREVET EUROPEEN

(11) **EP 3 405 812 B1**
(45) Date de publication et mention de la délivrance du brevet: **24.02.2021**
(21) Numéro de dépôt: 17712180.3
(22) Date de dépôt: 06.01.2017
(51) Int. Cl.: G01S 19/16

(54) **EQUIPEMENT ÉLECTRIQUE ET TABLEAU ÉLECTRIQUE COMPRENANT UN TEL ÉQUIPEMENT**
ELEKTRISCHE VORRICHTUNG UND VERTEILERTAFEL MIT SOLCH EINER VORRICHTUNG
ELECTRICAL DEVICE AND DISTRIBUTION BOARD COMPRISING SUCH A DEVICE

(30) Priorité: 20.01.2016 FR 1650449
(43) Date de publication de la demande: 28.11.2018
(73) Titulaire: Legrand France, 87000 Limoges (FR); Legrand SNC, 87000 Limoges (FR)
(72) Inventeur: BOURDIER, Bruno, 87000 Limoges (FR); LAURENT, Frédéric, 87570 Rilhac Rancon (FR)
(74) Mandataire: Jacobacci Coralis Harle
(86) Numéro de dépôt international: PCT/FR2017/050037
(87) Numéro de publication internationale: WO 2017/125660

(56) Documents cités:
- WO-A1-2015/102824
- CN-U- 203 616 367
- DE-U1-202010 013 844
- US-A1- 2007 124 062

## Description

### DOMAINE TECHNIQUE AUQUEL SE RAPPORTE L'INVENTION

La présente invention concerne la lutte contre le vol de tableaux électriques.

Elle concerne plus particulièrement un équipement électrique et un tableau électrique comprenant un tel équipement.

### ARRIERE-PLAN TECHNOLOGIQUE

On connaît, par exemple du document FR2730855, un équipement électrique comprenant des moyens de montage dans un tableau électrique.

De tels équipements sont parfois dénommés *"appareils électriques modulaires"* du fait que de tels appareils électriques ayant différentes fonctions, formant chacun un module, peuvent être réunis sur le tableau électrique selon une configuration adaptée à l'installation électrique concernée.

Les tableaux électriques ainsi constitués rassemblent toutefois par conséquent de nombreux appareils électriques et sont dès lors l'objet de vols, en particulier lorsque ces tableaux électriques sont implantés sur un chantier, d'accès plus facile qu'un bâtiment.

On connaît également du document DE 20 2010 013 844 un équipement électrique comprenant des moyens de montage dans un tableau électrique et un circuit comprenant un module de géolocalisation conçu pour générer une information de géolocalisation et un module de communication apte à émettre des données sur un réseau de télécommunication.

Le document US 2007/124 062 décrit par ailleurs un dispositif électronique comprenant un détecteur de mouvement, un module de communication sans fil et un système de détermination de position, par exemple de type GPS.

### OBJET DE L'INVENTION

Dans ce contexte, la présente invention propose un équipement électrique selon la revendication 1.

En cas de tentative de vol d'un tableau électrique dans lequel est monté un tel appareil électrique, le circuit commandera automatiquement l'émission de l'information de géolocalisation, ce qui permettra de connaître la position géographique du tableau électrique.

On peut prévoir par ailleurs qu'un tel équipement électrique présente en face avant une manette ou un bouton. Bien qu'une telle manette ou un tel bouton n'ait pas de rôle dans le fonctionnement du circuit, il donne à l'équipement électrique un aspect extérieur identique à celui d'un appareil électrique modulaire classique de sorte que le voleur ne se rendra pas compte que le tableau électrique volé comporte l'équipement électrique précité, conçu pour communiquer sa position géographique.

On peut prévoir en outre que l'équipement électrique comporte une partie de façade en saillie ; la manette s'étend alors par exemple à travers une ouverture formée dans ladite partie de façade et/ou le bouton s'étend par exemple dans un logement formé dans ladite partie de façade.

Un tel équipement électrique ressemble fortement à un appareil électrique modulaire, par exemple de type interrupteur différentiel.

Les moyens de montage peuvent comprendre un verrou s'étendant dans l'encoche (actionnable par exemple par un élément de manœuvre situé au niveau d'une face inférieure de l'équipement électrique). Le rail de support est un rail de support de tableau électrique.

Le module de communication peut quant à lui émettre un signal radiofréquence, ayant par exemple une fréquence comprise entre 300 MHz et 1 GHz (c'est-à-dire dans bande UHF), ici une fréquence comprise dans une bande de fréquences comprise entre 868 MHz et 870 MHz.

Le détecteur de mouvement comprend par exemple un accéléromètre.

L'invention propose également un tableau électrique comprenant un équipement électrique tel que défini ci-dessus, monté dans le tableau électrique au moyen desdits moyens de montage. Un rail de support de ce tableau électrique peut alors être reçu dans l'encoche de réception mentionnée plus haut.

### DESCRIPTION DETAILLEE D'EXEMPLES DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue en éclaté d'un équipement électrique selon l'invention ;
- la figure 2 est une vue en perspective d'un mécanisme d'appareillage de l'équipement électrique de la figure 1 ;
- la figure 3 est une vue en perspective de l'équipement électrique de la figure 1 (sans son couvercle) ;

- la figure 4 est une vue en perspective d'un module électronique de l'équipement électrique de la figure 1 ;
- la figure 5 représente schématiquement les éléments principaux d'un circuit électronique porté par l'équipement électrique de la figure 1 ;
- la figure 6 représente schématiquement un contexte possible d'utilisation de l'équipement électrique de la figure 1 ; et
- la figure 7 est un logigramme présentant un exemple de procédé de fonctionnement de l'équipement électrique de la figure 1.

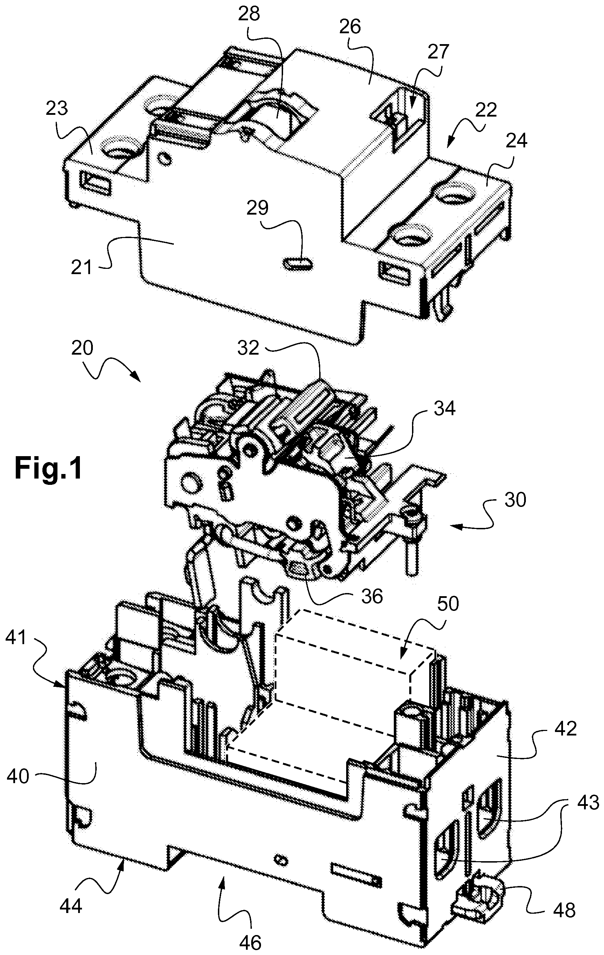

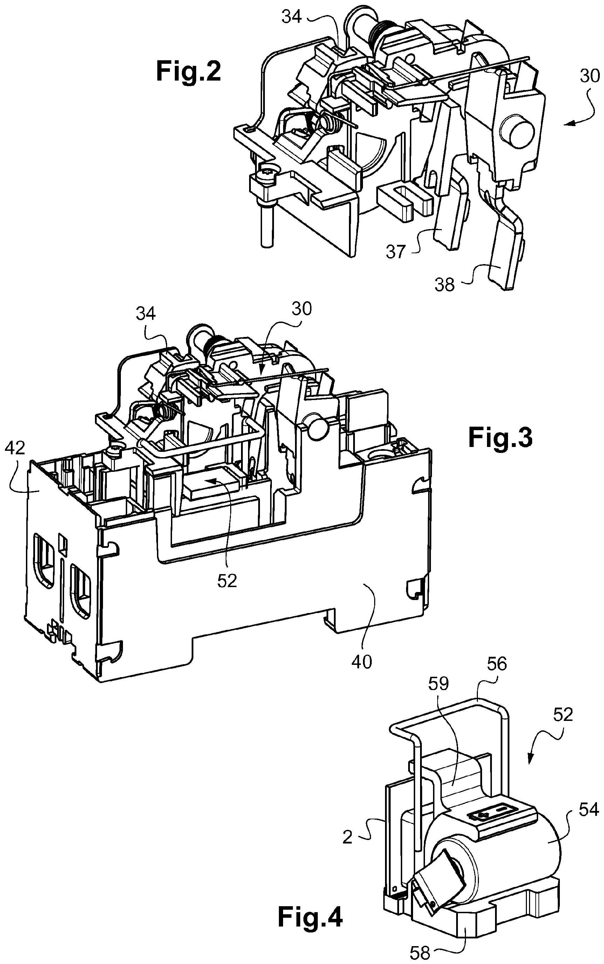

L'équipement électrique 20 représenté sur les figures 1 et 3 comprend un boîtier (de forme généralement parallélépipédique) formé de deux parois latérales 40, d'une paroi supérieure 41, d'une paroi inférieure 42, d'une paroi de fond (ou paroi arrière) 44 et d'un couvercle (formant paroi avant) 22.

On comprend que les orientations des parois sont données d'après leur situation en position montée de l'équipement électrique dans un tableau électrique, le couvercle 22 étant tourné en direction de l'utilisateur.

La paroi de fond 44 définit une encoche 46 destinée à recevoir un rail de support (par exemple un rail de type *"din Ω*") d'un tableau électrique. Ainsi, par coopération (par complémentarité de forme) du rail et de l'encoche 46, l'encoche 46 participe au montage de l'équipement électrique 20 dans le tableau électrique. Un tel tableau électrique est généralement reçu dans un coffret ou une armoire.

Outre l'encoche 46, les moyens de montage de l'équipement électrique 20 dans le tableau électrique comprennent un verrou (non représenté), déplaçable par action sur un élément de manœuvre 48 (prévu au niveau de la paroi inférieure 42) et saillant dans l'encoche 46 : en position montée, ce verrou enserre (avec la partie de la paroi de fond 44 formant le fond de l'encoche 46) le rail de support afin d'immobiliser l'équipement électrique 20 dans le tableau électrique ; par ailleurs, lorsque le verrou est déplacé par action sur l'élément de manœuvre 48 (typiquement à l'aide d'un tournevis), le verrou s'efface, ce qui permet le démontage de l'équipement électrique 20.

Le couvercle 22 présente, dans une zone médiane, une partie de façade 26 qui s'étend en saillie vers l'avant (*i.e.* vers le haut sur la figure 1) par rapport à des zones supérieure et inférieure 23, 24 du couvercle 22 de sorte que, lorsque l'équipement électrique 20 est monté dans un tableau électrique, la partie de façade 26 émerge hors d'un plastron du tableau électrique, à travers une fenêtre formée dans ce plastron.

Un tel équipement électrique 20 peut être monté, sur le rail de support du tableau électrique, à côté d'autres équipements électriques ayant la même forme générale (chaque face latérale 40 de l'équipement électrique 20 étant par exemple disposée au contact d'un tel autre équipement électrique) ; un tel équipement électrique 20 est de ce faire couramment désigné comme "*appareil électrique modulaire".*

La façade 26 du couvercle 22 présente une ouverture 28 traversée (lorsque l'équipement électrique 20 est assemblé) par une manette 32 montée à pivotement sur un mécanisme d'appareillage 30 reçu dans le boîtier de l'équipement électrique 20.

Ainsi, lorsque l'équipement électrique 20 est monté dans un tableau électrique, la manette 32 est accessible pour l'utilisateur.

La façade 26 du couvercle 22 présente également un logement 27 pour un bouton similaire à ceux couramment utilisées en tant que boutons de test dans les interrupteurs différentiels.

Une paroi latérale 21 du couvercle 22 présente une ouverture oblongue 29 pour le passage d'un pion saillant d'une paroi latérale d'un élément modulaire à coupure, comme expliqué plus bas.

Le mécanisme d'appareillage 30 est ici un mécanisme d'appareillage communément utilisé dans un interrupteur différentiel.

Comme bien visible en figure 2, ce mécanisme d'appareillage 30 comprend notamment un mécanisme de commande principal 34, un contact électrique de phase 37 et un contact électrique de neutre 38.

Le mécanisme de commande principal 34 est actionnable par actionnement de la manette 32 par un utilisateur.

Le mécanisme d'appareillage 30 comprend ici en outre un mécanisme de commande latéral auxiliaire 36. On peut prévoir en effet de monter sur le tableau électrique un élément modulaire à coupure, juxtaposé à l'équipement électrique 20, de sorte qu'un pion saillant d'une paroi latérale de cet élément modulaire à coupure coopère (en traversant l'ouverture oblongue 29) avec le mécanisme de commande auxiliaire 36. Un tel élément modulaire à coupure peut ainsi actionner, sous certaines conditions, le mécanisme de commande auxiliaire 36.

Toutefois, contrairement à un interrupteur différentiel, l'équipement électrique ne contient ni bobine ni relais de sorte que le mécanisme d'appareillage 30 définit un espace 50 situé globalement au centre du mécanisme d'appareillage 30 et entouré par les éléments précités du mécanisme d'appareillage 30.

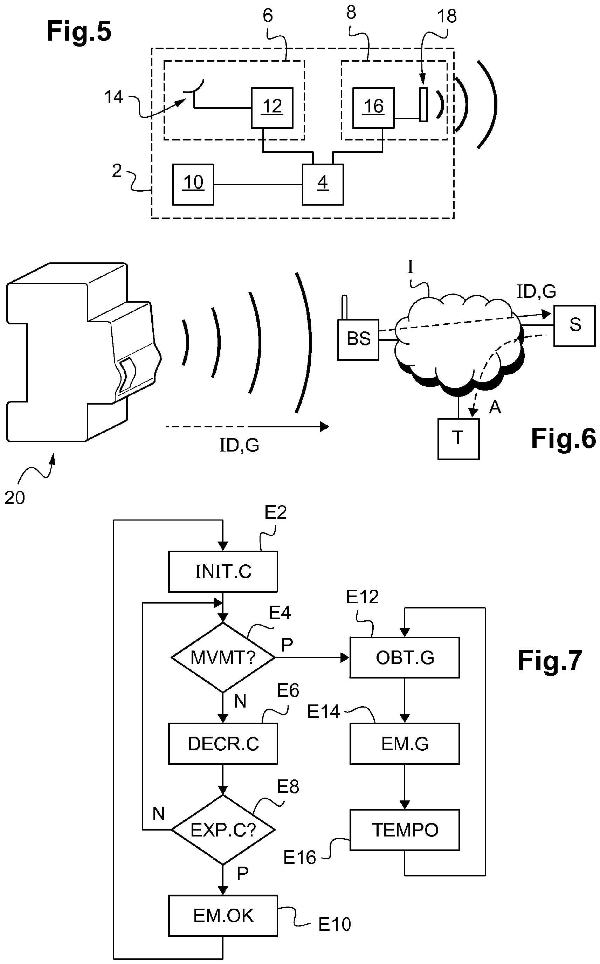

On propose justement ici que l'espace 50 laissé libre par l'absence de bobine et de relais reçoive, comme visible en figure 3, un module électronique 52 comprenant un circuit électronique 2 (tel que décrit ci-dessous en référence à la figure 5) et une batterie d'alimentation 54 de ce circuit électronique 2. Ce module électronique 52 est montré en figure 4.

Le module électronique 52 comprend ici en outre un support 58 (sur lequel sont montés le circuit électronique 2 et la batterie 54), une pièce de retenue 59 et une antenne d'émission 56 (référencée 18 en figure 5).

La pièce de retenue 59 est montée sur le support 58 et est conformée de manière d'une part à enserrer la batterie 54 (ici en ayant une forme globalement cylindrique s'étendant sur plus de la moitié de la circonférence de la batterie 54 également cylindrique) et d'autre part à retenir le circuit électronique 2 entre la pièce de retenue 59 elle-même et le support 58.

L'antenne d'émission 56 est fixée sur le circuit électronique 2 (et peut éventuellement permettre à un utilisateur de placer facilement le module électronique 52 dans l'espace 50, ou de l'en extraire facilement).

Les différents éléments de commande (manette 32, bouton de test, mécanisme de commande latéral auxiliaire 36) sont manœuvrables (de sorte que l'équipement électrique 20 a l'aspect extérieur d'un appareil électrique modulaire, ici un interrupteur différentiel modulaire), mais n'ont aucune conséquence au niveau de l'installation électrique dont fait partie le tableau électrique. En effet, du fait de l'absence de relais, la borne d'entrée et la borne de sortie de l'équipement électrique 20 (situées respectivement au droit de deux ouvertures 43 prévues dans la paroi inférieure 42) sont constamment isolées.

Grâce à son aspect extérieur identique à celui d'un appareil électrique modulaire usuel, un éventuel voleur du tableau électrique sur lequel l'équipement électrique 20 est monté ne s'apercevra pas des fonctionnalités particulières de cet équipement électrique 20, permettant sa localisation géographique, comme expliqué à présent.

La figure 5 représente les éléments principaux du circuit électronique 2 qui vient d'être mentionné.

Le circuit électronique 2 comprend un processeur 4, un module de géolocalisation 6, un module de communication 8 et un détecteur de mouvement 10 (par exemple un accéléromètre). Ces éléments sont par exemple reliés entre eux par un bus commun afin de pouvoir échanger des données, en particulier entre le processeur 4 et chacun des autres éléments.

Le module de géolocalisation 6 comprend une antenne de réception 14 de signaux en provenance de satellites et une unité de traitement 12 de ces signaux afin de générer une information de géolocalisation du circuit électronique 2 (et donc de l'équipement électrique 20), au moyen d'une technique de géolocalisation par un système de satellites (couramment désignée GNSS pour *"Global Navigation Satellite System"*).

Le module de communication 8 comprend une antenne d'émission 18 et un étage de conversion 16 conçu pour recevoir des données et appliquer à l'antenne d'émission 18 un signal radiofréquence représentatif de ces données de manière à émettre ce signal radiofréquence.

Dans l'exemple décrit ici, le module de communication 8 est conçu pour émettre de telles données sur le réseau de communication SIGFOX® et génère donc un signal radiofréquence représentatif de ces données dans la bande de fréquences comprise entre 868 MHz et 870 Mhz (bande ISL).

On utilise ainsi un réseau basse fréquence et basse consommation, ce qui permet de limiter la consommation électrique tirée au niveau de la batterie 54 et d'obtenir une bonne longévité de fonctionnement avec une telle batterie 54.

Le processeur 4 comprend par exemple un microprocesseur et au moins une mémoire (par exemple une mémoire non-volatile réinscriptible). La mémoire mémorise notamment des instructions de programme d'ordinateur conçues de sorte que le processeur 4 mette en œuvre un procédé tel que celui décrit ci-dessous en référence à la figure 7, lorsque ces instructions sont exécutées par le microprocesseur.

En variante, le processeur 4 pourrait être réalisé sous la forme d'un circuit intégré à application spécifique (ou ASIC, pour *"Application Specific Integrated Circuit*").

Comme expliqué plus en détail dans le cadre de la figure 7, le processeur 4 peut recevoir une information de mouvement en provenance du détecteur de mouvement 10 et une information de géolocalisation en provenance du module de géolocalisation 6, puis commander alors l'émission de l'information de géolocalisation (ainsi qu'éventuellement un identifiant du circuit électronique 2 et donc de l'équipement électrique 20) par le module de communication 8.

La figure 6 représente schématiquement un contexte possible d'utilisation de l'équipement électrique 20.

Comme il vient d'être indiqué, lorsqu'un mouvement est détecté par le détecteur de mouvement 10, le processeur 4 commande l'émission (comme déjà indiqué : par le module de communication 8 et sur un réseau de communication sans fil, ici le réseau SIGFOX®) d'un identifiant ID du circuit électronique 2 et d'une information de géolocalisation G de ce circuit électronique 2, à destination d'une station de base BS faisant partie de l'architecture de ce réseau.

La station de base BS est quant à elle reliée à un réseau public I tel que le réseau Internet et peut ainsi transmettre l'identifiant ID et l'information de géolocalisation G à un serveur S connecté au réseau public I. (Par souci de simplification, on a représenté en figure 5 la station de base BS et le serveur S directement reliés au réseau public I ; en pratique, la station de base BS et/ou le serveur S peuvent naturellement être reliés au réseau public I par l'intermédiaire d'autres dispositifs de communication.)

Selon un mode de réalisation envisageable, la station de base BS peut transmettre l'identifiant ID et l'information de géolocalisation G au serveur S quel que soit l'identifiant ID.

En variante, la station de base BS (ou un autre élément du réseau associé à celle-ci) peut transmettre l'identifiant ID et l'information de géolocalisation G à un serveur déterminé en fonction de cet identifiant ID (la station de base BS ou ledit autre élément du réseau mémorisant une table de correspondance associant chaque identifiant ID à un serveur de destination).

Lorsque le serveur S reçoit l'identifiant ID et l'information de géolocalisation G, le serveur S mémorise ces informations ID, G et émet un message électronique A à destination d'un terminal T connecté au réseau public I.

Le message électronique A est un message d'alerte destiné au propriétaire du tableau électrique sur lequel est monté l'équipement électrique 20 visant à informer ce propriétaire d'un déplacement de l'équipement électrique 20, qui peut correspondre à un vol du tableau électrique.

Dans l'exemple décrit ici, le message électronique A est transmis via le réseau public I (ici le réseau Internet). Le message d'alerte peut toutefois être transmis par d'autres moyens, par exemple au moyen d'un service de minimessage (le serveur S étant alors relié pour ce faire à un réseau de téléphonie mobile).

Le message d'alerte A peut éventuellement contenir l'information de géolocalisation G.

Le message d'alerte A peut en pratique être transmis seulement lors de la première réception de l'information de géolocalisation G (ce qui correspond à la détection du mouvement par le détecteur de mouvement 10 comme expliqué ci-dessous en référence à la figure 7). En variante, un message électronique A pourrait toutefois également être envoyé au terminal T à chaque réception de l'information de géolocalisation G par le serveur S.

Le propriétaire, alerté par la réception du message électronique A, peut se connecter au serveur S (par exemple au moyen du terminal T) et consulter l'information de géolocalisation G en fournissant l'identifiant ID (ainsi qu'éventuellement un mot de passe). En pratique, le terminal T émet par exemple une requête contenant l'identifiant ID et le mot de passe à destination du serveur S et reçoit en retour l'information de géolocalisation G mémorisée au niveau du serveur S en association avec l'identifiant ID.

Comme décrit ci-dessous en référence à la figure 7, une fois un mouvement détecté par le détecteur de mouvement 10, l'information de géolocalisation G est régulièrement transmise au serveur S de sorte que l'utilisateur (ici le propriétaire du tableau électrique) peut suivre en continu la position de l'équipement électrique 20 en se connectant au serveur S.

Ainsi, en cas de vol du tableau électrique, l'utilisateur pourra connaître en continu la position géographique du tableau électrique volé.

La figure 7 est un logigramme présentant un exemple de procédé de fonctionnement de l'équipement électrique 20.

Ce procédé est par exemple mis en œuvre par le processeur 4 (ici, comme déjà indiqué, du fait de l'exécution d'instructions de programme d'ordinateur par un microprocesseur du processeur 4).

Le procédé de la figure 7 débute à l'étape E2 à laquelle le processeur 4 initialise un compteur à une valeur prédéterminée (correspondant par exemple à une durée comprise entre 1 heure et 48 heures, ici 24 heures).

Le processeur 4 détermine à l'étape E4 si un mouvement a été détecté par le détecteur de mouvement 10, par exemple en consultant un historique (récent) des données fournies par le détecteur de mouvement (ici des données d'accélération).

En cas de détection de mouvement, le procédé se poursuit à l'étape E12 décrite plus bas.

En l'absence de détection de mouvement, le processeur 4 décrémente le compteur susmentionné à l'étape E6 et détermine à l'étape E8 si ce compteur a expiré (ce qui se produit ici comme déjà indiqué 24 heures après son initialisation).

En l'absence d'expiration du compteur, le procédé boucle à l'étape E4 décrite ci-dessus.

En cas d'expiration du compteur, le processeur 4 commande à l'étape E10 l'émission par le module de communication 8 d'un message de bon fonctionnement sur le réseau de télécommunication mentionné plus haut (par exemple à destination du serveur S).

Le procédé boucle à l'étape E2 pour initialisation du compteur et reprise du fonctionnement qui vient d'être décrit.

On comprend que ce procédé est décrit ici à titre purement illustratif. On peut par exemple prévoir en variante que le processeur puisse basculer en mode veille, en étant programmé pour un réveil périodique avec une période prédéterminée (comprise par exemple entre 1 heure et 48 heures, ici 24 heures) et en commandant, à chaque réveil, l'émission du message de bon fonctionnement et le retour au mode veille. Dans ce mode de réalisation, le détecteur de mouvement 10 est conçu pour réveiller le processeur 4 en cas de détection de mouvement.

Quoiqu'il en soit, l'équipement électrique 20 émet périodiquement un message de bon fonctionnement (ou trame de vie) à destination du serveur S.

Comme déjà indiqué, en cas de détection de mouvement, le procédé se poursuit à l'étape E12 à laquelle le processeur 4 obtient l'information de géolocalisation G courante en provenance du module de géolocalisation 6.

Le processeur 4 commande alors à l'étape E14 l'émission de cette information de géolocalisation G (et de l'identifiant ID) sur le réseau de télécommunication sans fil mentionné plus haut et à destination du serveur S, au moyen du module de communication 8.

Le traitement de l'information de géolocalisation G au niveau du serveur S a été présenté ci-dessus dans le cadre de la description de la figure 6.

Le processeur 4 procède à l'étape E16 à une temporisation (correspondant par exemple à un temps d'attente compris entre 1 min et 120 min, ici 10 min), puis boucle à l'étape E12 pour obtention et émission d'une nouvelle information de géolocalisation courante.

L'équipement électrique 20 émet ainsi régulièrement (ici périodiquement) l'information de géolocalisation G à destination du serveur S, dès qu'un mouvement a été détecté par le détecteur de mouvement 10.

## Revendications

1. Équipement électrique (20) comprenant des moyens de montage (46) dans un tableau électrique et un circuit (2) comprenant un module de géolocalisation (6) conçu pour générer une information de géolocalisation et un module de communication (8) apte à émettre des données (ID, G) sur un réseau de télécommunication,
**caractérisé en ce que** les moyens de montage comprennent une encoche (46) conçue pour recevoir un rail de support du tableau électrique et **en ce que** le circuit (2) comprend un détecteur de mouvement (10),
le circuit (2) étant conçu pour commander l'émission de l'information de géolocalisation (G) par le module de communication (6) lorsqu'un mouvement est détecté par le détecteur de mouvement (10).

2. Équipement électrique selon la revendication 1, présentant une manette (32) en face avant.

3. Équipement électrique selon la revendication 1 ou 2, présentant un bouton en face avant.

4. Équipement électrique selon l'une des revendications 1 à 3, comportant une partie de façade (26) en saillie.

5. Équipement électrique selon la revendication 4 prise dans la dépendance de la revendication 2, dans lequel la manette (32) s'étend à travers une ouverture (28) formée dans ladite partie de façade (26).

6. Équipement électrique selon la revendication 4 prise dans la dépendance de la revendication 3, dans lequel le bouton s'étend dans un logement (27) formé dans ladite partie de façade (26).

7. Équipement électrique selon l'une des revendications 1 à 6, dans lequel les moyens de montage comprennent un verrou s'étendant dans l'encoche (46).

8. Équipement électrique selon l'une des revendications 1 à 7, dans lequel le module de communication (8) est conçu pour émettre un signal radiofréquence.

9. Équipement électrique selon la revendication 8, dans lequel le signal radiofréquence a une fréquence comprise entre 300 MHz et 1 GHz.

10. Équipement électrique selon la revendication 8 ou 9, dans lequel le signal radiofréquence a une fréquence comprise dans une bande de fréquences comprise entre 868 MHz et 870 MHz.

11. Équipement électrique selon l'une des revendications 1 à 10, dans lequel le détecteur de mouvement (10) comprend un accéléromètre.

12. Tableau électrique comprenant un équipement électrique selon l'une des revendications 1 à 11 monté dans le tableau électrique au moyen desdits moyens de montage.

## Patentansprüche

1. Elektrische Vorrichtung (20) mit Mitteln (46) zum Einbauen in eine Verteilertafel und einer Schaltung (2) mit einem Geolokalisierungsmodul (6), das dazu ausgelegt ist, eine Geolokalisierungsinformation zu erzeugen, und einem Kommunikationsmodul (8), das geeignet ist, Daten (ID, G) über ein Fernmeldenetz abzugeben,
**dadurch gekennzeichnet, daß** die Einbaumittel einen Einschnitt (46) aufweisen, der dazu ausgelegt ist, eine Trageschiene der Verteilertafel aufzunehmen, und daß die Schaltung (2) einen Bewegungsmelder (10) aufweist,
wobei die Schaltung (2) dazu ausgelegt ist, das Absenden der Geolokalisierungsinformation (G) durch das Kommunikationsmodul (8) zu steuern, wenn durch den Bewegungsmelder (10) eine Bewegung erfaßt wird.

2. Elektrische Vorrichtung gemäß Anspruch 1, die auf der Vorderseite einen Hebel (32) aufweist.

3. Elektrische Vorrichtung gemäß Anspruch 1 oder 2, die auf der Vorderseite einen Knopf aufweist.

4. Elektrische Vorrichtung gemäß einem der Ansprüche 1 bis 3, die einen vorstehenden Frontteil (26) aufweist.

5. Elektrische Vorrichtung gemäß Anspruch 4 in Abhängigkeit von Anspruch 2, bei der sich der Hebel (32) durch eine im Frontteil (26) ausgebildete Öffnung (28) erstreckt.

6. Elektrische Vorrichtung gemäß Anspruch 4 in Abhängigkeit von Anspruch 3, bei der sich der Knopf in einer im Frontteil (26) gebildeten Aufnahme (27) erstreckt.

7. Elektrische Vorrichtung gemäß einem der Ansprüche 1 bis 6, bei der die Einbaumittel einen sich im Einschnitt (46) erstreckenden Riegel aufweisen.

8. Elektrische Vorrichtung gemäß einem der Ansprüche 1 bis 7, bei der das Kommunikationsmodul (8) dazu ausgelegt ist, ein Funkfrequenzsignal auszusenden.

9. Elektrische Vorrichtung gemäß Anspruch 8, bei der das Funkfrequenzsignal eine Frequenz zwischen 300 MHz und 1 GHz aufweist.

10. Elektrische Vorrichtung gemäß Anspruch 8 oder 9, bei der das Funkfrequenzsignal eine in einem Frequenzband zwischen 868 MHz und 870 MHz liegende Frequenz aufweist.

11. Elektrische Vorrichtung gemäß einem der Ansprüche 1 bis 10, bei der der Bewegungsmelder (10) einen Beschleunigungsmesser aufweist.

12. Verteilertafel mit einer mittels der besagten Einbaumittel in der Verteilertafel befestigten elektrischen Vorrichtung gemäß einem der Ansprüche 1 bis 11.

## Claims

1. Electrical equipment (20) including mounting means (46) for mounting in an electrical panel and a circuit (2) including a geolocation module (6) that is designed to generate geolocation information and a communications module (8) that is suitable for transmitting data (ID, G) over a telecommunications network;
the electrical equipment being **characterized in that** the mounting means include a notch (46) that is designed to receive a support rail of the electrical panel, and **in that** the circuit (2) includes a movement detector (10);
the circuit (2) being designed to cause the geolocation information (G) to be transmitted by the communications module (6) when a movement is detected by the movement detector (10).

2. Electrical equipment according to claim 1, presenting a lever (32) on its front face.

3. Electrical equipment according to claim 1 or claim 2, presenting a button on its front face.

4. Electrical equipment according to any one of claims 1 to 3, including a projecting front-face portion (26).

5. Electrical equipment according to claim 4 when dependent on claim 2, wherein the lever (32) extends through an opening (28) formed in said front-face portion (26) .

6. Electrical equipment according to claim 4 when dependent on claim 3, wherein the button extends into a housing (27) formed in said front-face portion (26).

7. Electrical equipment according to any one of claims 1 to 6, wherein the mounting means include a latch that extends in the notch (46).

8. Electrical equipment according to any one of claims 1 to 7, wherein the communications module (8) is designed to transmit a radiofrequency signal.

9. Electrical equipment according to claim 8, wherein the radiofrequency signal has a frequency lying in the range 300 MHz to 1 GHz.

10. Electrical equipment according to claim 8 or claim 9, wherein the radiofrequency signal has a frequency lying in the 868 MHz to 870 MHz frequency band.

11. Electrical equipment according to one of claims 1 to 10, wherein the movement detector (10) comprises an accelerometer.

12. An electrical panel including electrical equipment according to one of claims 1 to 11 mounted in the electrical panel by means of said mounting means.
